# EUROPÄISCHE PATENTSCHRIFT

(11) **EP 4 464 502 B1**
(45) Veröffentlichungstag und Bekanntmachung des Hinweises auf die Patenterteilung: **24.12.2025**
(21) Anmeldenummer: 24172063.0
(22) Anmeldetag: 24.04.2024
(51) Int. Cl.: B29C 49/68, B29C 49/78, B29C 49/06, B29C 49/36, B29C 49/64, B29K 67/00, B29L 31/00

(54) **BEHÄLTERHERSTELLUNGSMASCHINE UND VERFAHREN ZUM HERSTELLEN VON BEHÄLTERN AUS VORFORMLINGEN**
CONTAINER MANUFACTURING MACHINE AND METHOD FOR MANUFACTURING CONTAINERS FROM PREFORMS
MACHINE DE FABRICATION DE RÉCIPIENTS ET PROCÉDÉ DE FABRICATION DE RÉCIPIENTS À PARTIR DE PRÉFORMES

(30) Priorität: 17.05.2023 DE 102023113007
(43) Veröffentlichungstag der Anmeldung: 20.11.2024
(73) Patentinhaber: KHS GmbH, 44143 Dortmund (DE)
(72) Erfinder: Firchau, Daniel, 44143 Dortmund (DE); Klatt, Dieter, 44143 Dortmund (DE); Lewin, Frank, 44143 Dortmund (DE); Ulutürk, Deniz, 44143 Dortmund (DE)

(56) Entgegenhaltungen:
- DE-A1- 102010 003 350
- US-A1- 2009 304 370
- US-A1- 2015 079 220

## Beschreibung

Die Erfindung betrifft eine Behälterherstellungsmaschine und ein Verfahren zum Herstellen von Behältern aus Vorformlingen.

Für die Herstellung von Behältern aus Vorformlingen, insbesondere wenn diese aus Kunststoffmaterial bestehen, können Vorformlinge zu Behältern umgeformt werden. Vor dem Umformen werden die Vorformlinge dazu thermisch konditioniert, um deren Material zu erwärmen. Dazu können die Vorformlinge in einer Behälterherstellungsmaschine entlang einer Transportstrecke durch eine Heizvorrichtung transportiert werden. Die Transportstrecke gibt dabei eine Transportrichtung vor. In der Heizvorrichtung werden die Vorformlinge derart erwärmt, dass sie ein Temperaturprofil entlang ihrer Längsachse aufweisen, das für die Umformung zu einem Behälter geeignet ist.

Aus der DE 10 2010 021 446 A1 ist eine Heizvorrichtung bekannt, die zwei Heizstufen für die Vorformlinge aufweist, wobei zwischen der ersten und der zweiten Heizstufe eine Temperaturmessung durchgeführt wird. Mit der ersten Heizstufe werden die Vorformlinge auf eine Grundtemperatur erwärmt. Mit der zweiten Heizstufe werden die Vorformlinge basierend auf der Temperaturmessung individuell mit einem Temperaturprofil beaufschlagt. Weitere Gattungsgemäße Vorrichtungen und Verfahren sind in den Patentschriften US2009/304370A1, US2015/079220A1 und DE102010003350A1 beschrieben.

Diese Heizvorrichtungen weisen eine erhöhte Anfälligkeit für Störgrößen auf, wie z. B. Umgebungstemperatur, Vorformlingsqualität/-material/-recyclatanteil oder einer streuenden Temperatur der Vorformlinge beim Eingang in die Heizvorrichtung bzw. einer verlinkten Vorformlingsproduktion auf, wenn die Vorformlinge nach ihrer Herstellung nicht auf Umgebungstemperatur gekühlt werden. Daher kann die Temperatur der Vorformlinge nach den Heizstufen dennoch streuen und die Produktivität der Maschine daher durch erhöhten Ausschuss sinken.

Mit der oben beschriebenen Heizvorrichtung erfordert die Implementierung von Sonderanwendungen, wie zum Beispiel Preferential Heating oder der Herstellung von Behältern mit einem ovalen Querschnitt, daher einen verhältnismäßig großen Aufwand.

Aufgabe der Erfindung ist es, eine Behälterherstellungsmaschine und ein Verfahren zum Herstellen von Behältern aus Vorformlingen bereitzustellen, die ohne großen Aufwand, flexibel und einfach die Implementierung von Sonderanwendungen für die thermische Konditionierung von Vorformlingen erlaubt.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einer Behälterherstellungsmaschine zum Herstellen von Behältern aus Vorformlingen, umfassend eine erste Heizvorrichtung zum thermischen Konditionieren mindestens eines Vorformlings gemäß einem ersten Heizprofil, mindestens eine Umformvorrichtung zum Umformen des mindestens einen thermisch konditionierten Vorformlings zu einem Behälter, eine Transportstrecke zum Transportieren von Vorformlingen mindestens von der ersten Heizvorrichtung bis mindestens zur Umformvorrichtung, und mindestens eine in der Transportstrecke angeordnete zweite Heizvorrichtung zum einzeln thermischen Konditionieren des mindestens einen Vorformlings gemäß einem für jeden Vorformling individuellen zweiten Heizprofil, ist erfindungsgemäß vorgesehen, dass die zweite Heizvorrichtung als ein von der ersten Heizvorrichtung unabhängig positioniertes Modul der Behälterherstellungsmaschine ausgebildet ist.

Mit der Erfindung wird eine Behälterherstellungsmaschine bereitgestellt, bei der die zweite Heizvorrichtung separat von der ersten Heizvorrichtung ausgebildet ist und somit ein eigenes Modul der Behälterherstellungsmaschine bereitstellt, das unabhängig von der ersten Heizvorrichtung in der Behälterherstellungsmaschine angeordnet sein kann. Dies bewirkt, dass die zweite Heizvorrichtung bei der Planung des Aufbaus der Behälterherstellungsmaschine flexibel in der Behälterherstellungsmaschine an der Transportstrecke angeordnet bzw. in die Transportstrecke integriert werden kann. Die zweite als Vorrichtung kann bei der Planung des Aufbaus der Behälterherstellungsmaschine damit unabhängig von der ersten Heizvorrichtung an verschiedenen Positionen in der Transportstrecke angeordnet werden. Nach dem Aufbau der Behälterherstellungsmaschine kann die zweite Heizvorrichtung fest in die Behälterherstellungsmaschine integriert sein. Die zweite Heizvorrichtung kann damit unabhängig von der ersten Heizvorrichtung installiert und betrieben werden. Dabei kann die zweite Heizvorrichtung vor oder nach der ersten Heizvorrichtung an der Transportstrecke angeordnet werden. Es ist ebenfalls denkbar, das sowohl vor als auch nach der ersten Heizvorrichtung je mindestens eine zweite Heizvorrichtung angeordnet sein kann. Durch diesen modularen Aufbau kann unbeeinflusst von der ersten Heizvorrichtung die thermische Konditionierung einzelner Vorformlinge in der zweiten Heizvorrichtung erfolgen. Die Vorformlinge durchlaufen dabei sowohl die erste Heizvorrichtung als auch die zweite Heizvorrichtung. Die zweite Heizvorrichtung ist dabei derart beschaffen, dass lediglich ein einzelner Vorformling in der zweiten Heizvorrichtung gleichzeitig thermisch konditioniert werden kann. Mehrere Vorformlinge können nicht gleichzeitig in der zweiten Heizvorrichtung thermisch konditioniert werden. Die Transportstrecke kann Transportvorrichtungen aufweisen, die zum Entnehmen und/oder Übergeben von Vorformlingen an weitere Komponenten der Behälterherstellungsmaschine ausgebildet sein können. Transportvorrichtungen können zum Beispiel Transporträder Haltetaschen oder Greifeinrichtungen sein oder beispielsweise Förderketten mit Transportdornen sein. Die erste Heizvorrichtung kann dabei zum Beispiel ein aus dem Stand der Technik bekanntes Heizmodul sein, in dem die Vorformlinge mittels einer Förderkette an Radiatoren vorbei transportiert werden und die Vorformlinge gemäß einen ersten Heizprofil thermisch konditioniert. Alternativ kann die erste Heizvorrichtung Heizeinheiten aufweisen, in die einzelne Vorformlinge eingeführt und thermisch konditioniert werden können. Die zweite Heizvorrichtung kann beispielsweise eine Heizkammer aufweisen, wobei die Heizkammer einen einzelnen Vorformlingen thermisch konditionieren kann. Dabei können die Vorformlinge beispielsweise weniger als eine Sekunde innerhalb der Heizkammer angeordnet sein, d. h. während des Durchlaufens der Transportstrecke weniger als eine Sekunde durch die zweite Heizvorrichtung thermisch konditioniert werden. Mit der Erfindung wird damit die Flexibilität bei der Planung und dem Aufbau der Behälterherstellungsmaschine erhöht, sodass ohne großen Aufwand Sonderanwendungen, wie zum Beispiel Preferential Heating oder die Herstellung von Behältern mit einem ovalen Querschnitt, implementiert werden können. Die Reihenfolge, dass zuerst die erste Heizvorrichtung eine Grundwärme auf die Vorformlinge aufbringt und die zweite Heizvorrichtung die Vorformlinge mit einem individuellen Temperaturprofil beaufschlagt, muss damit nicht weiter zwingend eingehalten werden. Weiter können auch bauliche Gegebenheiten einer Maschinenhalle durch die flexible Aufstellung der zweiten Heizvorrichtung in Bezug zur ersten Heizvorrichtung berücksichtigt und verbessert ausgenutzt werden.

Gemäß einem Beispiel kann zwischen der zweiten Heizvorrichtung und der ersten Heizvorrichtung eine Übergabe der Vorformlinge zwischen einer der Transportvorrichtungen der Transportstrecke und der zweiten Heizvorrichtung in einem Übergabebereich erfolgen.

Unter einer Übergabe zwischen der Transportvorrichtung und der zweiten Heizvorrichtung kann dabei unter anderem beispielsweise ein Einlegen oder Übergeben eines Vorformlings in bzw. an die zweite Heizvorrichtung, ein Entnehmen eines Vorformlings aus der zweiten Heizvorrichtung, ein Entnehmen eines Vorformlings aus der ersten Heizvorrichtung durch die zweite Heizeinrichtung bzw. ein Einlegen oder Übergeben eines Vorformlings von der zweiten Heizeinrichtung in bzw. an die erste Heizvorrichtung verstanden werden.

Gemäß einem Beispiel kann die erste Messvorrichtung und die zweite Heizvorrichtung entlang der Transportstrecke vor der ersten Heizvorrichtung angeordnet sein.

Die zweite Heizvorrichtung kann damit der ersten Heizvorrichtung vorgeschaltet sein und eine individuelle Vorbehandlung der Vorformlinge für die thermische Konditionierung durch die erste Heizvorrichtung durchführen. So können die Vorformlinge vor dem Eintritt in die erste Heizvorrichtung zum Beispiel durch die zweite Heizvorrichtung auf ein einheitliches Temperaturprofil gebracht werden, das durch die erste Heizvorrichtung mit dem ersten Heizprofil zum Beispiel insgesamt angehoben wird.

Gemäß einem anderen Beispiel können die erste Messvorrichtung und die zweite Heizvorrichtung entlang der Transportstrecke nach der ersten Heizvorrichtung angeordnet sein.

Die zweite Heizvorrichtung kann dabei von der ersten Heizvorrichtung getrennt an der Transportstrecke angeordnet sein. Dabei können beispielsweise Transportvorrichtungen der Transportstrecke zwischen der zweiten Heizvorrichtung der ersten Heizvorrichtung angeordnet sein, sodass die zweite Heizvorrichtung nicht zwingend unmittelbar nach der ersten Heizvorrichtung angeordnet sein muss.

Gemäß einem weiteren Beispiel kann die zweite Heizvorrichtung in die Umformvorrichtung integriert sein.

Die Umformvorrichtung kann dazu zum Beispiel eine Vielzahl von Umformstationen für Behälter aufweisen, die entlang des Umfangs eines drehbar gelagerten Rads angeordnet sind. Zwischen den Umformstationen können jeweils Heizstationen der zweiten Heizvorrichtung angeordnet sein. So kann abwechselnd eine Umformstation und eine Heizstation entlang des Umfangs des Rades angeordnet sein. Beim Transport der Vorformlinge zu der Umformvorrichtung können die Vorformlinge dann zuerst in die zweite Heizvorrichtung eingelegt werden. Nachdem die Vorformlinge mit ihrem jeweiligen individuellen zweiten Heizprofil beaufschlagt wurden, können sie aus den Heizstationen entnommen und direkt in die Umformstationen eingelegt werden.

Weiter ist zum Beispiel denkbar, dass die Behälterherstellungsmaschine eine erste Messvorrichtung zum Messen eines ersten Profils einer Eigenschaft, insbesondere eines Temperaturprofils, eines Opazität- oder Transparenzprofils, eines Materialreinheitprofils und/oder eines Farbprofils, des mindestens einen entlang der Transportstrecke transportierten Vorformlings aufweisen kann und das zweite Heizprofil auf dem für den Vorformling gemessenen ersten Profil basieren kann, wobei die zweite Heizvorrichtung entlang der Transportstrecke hinter der ersten Messvorrichtung angeordnet sein kann.

Der zweiten Heizvorrichtung kann damit eine erste Messvorrichtung vorgeschaltet werden. Die Messvorrichtung kann dabei vor dem thermischen Konditionieren in der zweiten Heizvorrichtung ein erstes Profil einer Eigenschaft des Vorformlings für jeden Vorformling ermitteln. Mit dem ersten Profil kann dann ein zweites Heizprofil für den jeweiligen Vorformling erzeugt werden, mit dem die zweite Heizvorrichtung den jeweiligen Vorformling beaufschlagen kann. D. h., dass das von der zweiten Heizvorrichtung verwendete Heizprofil auf dem durch die erste Messvorrichtung ermittelten Profil basiert.

Die von der ersten Messvorrichtung gemessene Eigenschaft kann z. B. die Temperatur, die Opazität bzw. die Transparenz, die Materialreinheit und/oder die Farbe des Vorformlings sein.

Weiter kann die zweite Heizvorrichtung beispielsweise als eine separate Heizeinheit, insbesondere eine Kammerheizung oder Topfheizung, für einen einzelnen Vorformling ausgebildet sein.

Die separate Heizeinheit kann dabei beispielsweise aufgeklappt werden, um einen Vorformling in sich hineinzulegen. Alternativ kann die separate Heizeinheit topfförmig ausgebildet sein und eine Zufuhröffnung aufweisen, in die der Vorformling hineingefahren werden kann. Dabei kann der Vorformling entweder in die Heizeinheit hinein bewegt oder die Heizeinheit über den Vorformling bewegt werden.

Weiter ist denkbar, dass die Behälterherstellungsmaschine beispielsweise eine zweite Messvorrichtung zum Messen eines zweiten Temperaturprofils mindestens eines entlang der Transportstrecke transportierten Vorformlings aufweisen kann, die entlang der Transportstrecke nach der mindestens einen zweiten Heizvorrichtung angeordnet ist.

Mit der zweiten Messvorrichtung kann das Temperaturprofil eines Vorformlings nach dem durchlaufend der zweiten Heizvorrichtung ermittelt werden. Sofern das Temperaturprofil einem Soll-Temperaturprofil im Wesentlichen entspricht, kann der Vorformling zu der Umformvorrichtung weiterbewegt werden. Falls das Temperaturprofil im Wesentlichen nicht dem Soll-Temperaturprofil entsprechen sollte, kann der Vorformling aus der Transportstrecke entfernt werden oder erneut der zweiten Heizvorrichtung für eine weitere thermische Konditionierung zugeführt werden. Dann kann ein drittes Heizprofil erzeugt werden, mit dem der Vorformling durch die zweite Heizvorrichtung thermisch konditioniert wird.

Gemäß einem weiteren Beispiel kann die Behälterherstellungsmaschine eine Umsetzvorrichtung zum Bewegen eines aus der zweiten Heizvorrichtung entnommenen Vorformlings zu der zweiten Messvorrichtung aufweisen.

Die Umsetzvorrichtung kann insbesondere dann vorgesehen werden, wenn die zweite Heizvorrichtung in die Umformvorrichtung integriert ist. Dann kann die Umsetzvorrichtung beispielsweise einen Vorformling aus einer Heizeinheit der zweiten Heizvorrichtung entnehmen, ihn an der zweiten Messvorrichtung vorbeiführen, damit das zweite Temperaturprofil des Vorformlings gemessen werden kann, und dann in eine Umformeinheit einlegen, sofern das zweite Temperaturprofil dem Soll-Temperaturprofil entspricht. Alternativ kann die Umsetzvorrichtung die Vorformlinge aus einem der Umformeinrichtung entlang der Transportstrecke nachgeschalteten Transportrad entnehmen und in ein der Umformvorrichtung entlang der Transportstrecke vorgeschaltetem Transportrad einlegen. Damit kann die Qualität der hergestellten Behälter weiter verbessert werden.

Die Behälterherstellungsmaschine kann zum Beispiel weiter eine Vorformlingherstellungsvorrichtung aufweisen, wobei die Transportstrecke sich zusätzlich von der Vorformlingherstellungsvorrichtung zur ersten Heizvorrichtung oder zur zweiten Heizvorrichtung erstreckt.

Die Vorformlingherstellungsvorrichtung kann beispielsweise eine Spritzgussvorrichtung sein, die Vorformlinge mittels Spritzguss herstellt. Die Vorformlinge aus der Spritzgussvorrichtung können unmittelbar in die Transportstrecke eingefügt werden und ohne auf Umgebungstemperatur abzukühlen der thermischen Konditionierung durch die beiden Heizvorrichtungen zugeführt werden.

Es ist weiter denkbar, dass die Behälterherstellungsmaschine mindestens eine Steuervorrichtung zum Ermitteln des zweiten Heizprofils aus dem ersten Temperaturprofil und zum Ansteuern der zweiten Heizvorrichtung gemäß dem zweiten Heizprofil aufweisen kann.

In diesem Beispiel kann die Steuervorrichtung weiter beispielsweise zum Vergleichen des zweiten Temperaturprofils mit einem Soll-Temperaturprofil ausgebildet sein, wobei die Behälterherstellungsmaschine vorzugsweise weiter eine Auswurfvorrichtung zum Aussortieren von Vorformlingen, deren zweites Temperaturprofil nicht im Wesentlichen mit dem Soll-Temperaturprofil übereinstimmt, aus der Transportstrecke aufweist.

Unter dem Begriff im Wesentlichen wird dabei verstanden, dass das zweite Temperaturprofil innerhalb der üblichen Fehlergrenzen mit dem Soll-Temperaturprofil übereinstimmt.

Weiter betrifft die Erfindung ein Verfahren zum Herstellen von Behältern aus Vorformlingen, wobei thermisch konditionierte Vorformlinge in einer Umformvorrichtung zu Behältern geformt werden, wobei das Verfahren vorher zumindest die folgenden Schritte aufweist: Thermisches Konditionieren mindestens eines Vorformlings gemäß einem ersten Heizprofil mittels einer ersten Heizvorrichtung; wobei davor oder danach die folgenden Schritte durchgeführt werden: Thermisches Konditionieren des Vorformlings gemäß dem zweiten Heizprofil in einer zweiten Heizvorrichtung und wobei gemäß der Erfindung vorgesehen ist, dass die zweite Heizvorrichtung als ein von der ersten Heizvorrichtung unabhängig positioniertes Modul der Behälterherstellungsmaschine ausgebildet ist.

In einem Beispiel kann der mindestens eine Vorformling zwischen der zweiten Heizvorrichtung und der ersten Heizvorrichtung zwischen einer Transportvorrichtung der Transportstrecke und der zweiten Heizvorrichtung in einem Übergabebereich übergeben werden.

Gemäß einem weiteren Beispiel kann das Verfahren weiter zumindest die folgenden Schritte aufweisen: Herstellen mindestens eines Vorformlings mittels einer Vorformlingherstellungsvorrichtung und Ausgeben des Vorformlings an die Transportstrecke unmittelbar nach dessen Herstellung; und Transportieren des Vorformlings von der Vorformlingherstellungsvorrichtung zur ersten Heizvorrichtung oder zweiten Heizvorrichtung entlang der Transportstrecke.

Weiter kann das Verfahren vor dem einzeln thermischen Konditionieren des Vorformlings zum Beispiel die folgenden Schritte aufweisen: Ermitteln eines ersten Profils einer Eigenschaft, insbesondere eines Temperaturprofils, eines Opazität- oder Transparenzprofils, eines Materialreinheitprofils und/oder eines Farbprofils, eines Vorformlings mittels einer ersten Messvorrichtung und Erzeugen des zweiten Heizprofils für den Vorformling basierend auf dem ersten Profil.

Vorteile und Wirkungen sowie Weiterbildungen des Verfahrens ergeben sich aus den Vorteilen und Wirkungen sowie Weiterbildungen der oben beschriebenen Behälterherstellungsmaschine. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1a, b: schematische Darstellungen einer Behälterherstellungsmaschine mit stationärer zweiter Heizvorrichtung gemäß einem ersten und zweiten Beispiel;
- Figur 2: eine schematische Darstellung einer Behälterherstellungsmaschine gemäß einem dritten Beispiel;
- Figur 3a, b: schematische Darstellungen einer Behälterherstellungsmaschine mit in die Umformvorrichtung integrierten zweiten Heizvorrichtung gemäß einem vierten und fünften Beispiel;
- Figur 4: eine schematische Darstellung einer Behälterherstellungsmaschine gemäß einem sechsten Beispiel;
- Figur 5a, b: ein Flussdiagramm eines Verfahrens zum Steuern der Behälterherstellungsmaschine.

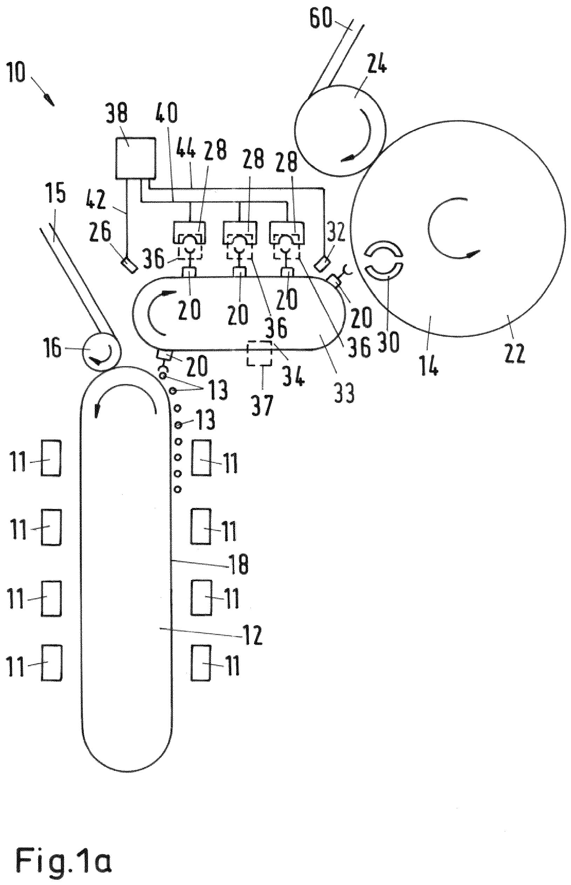

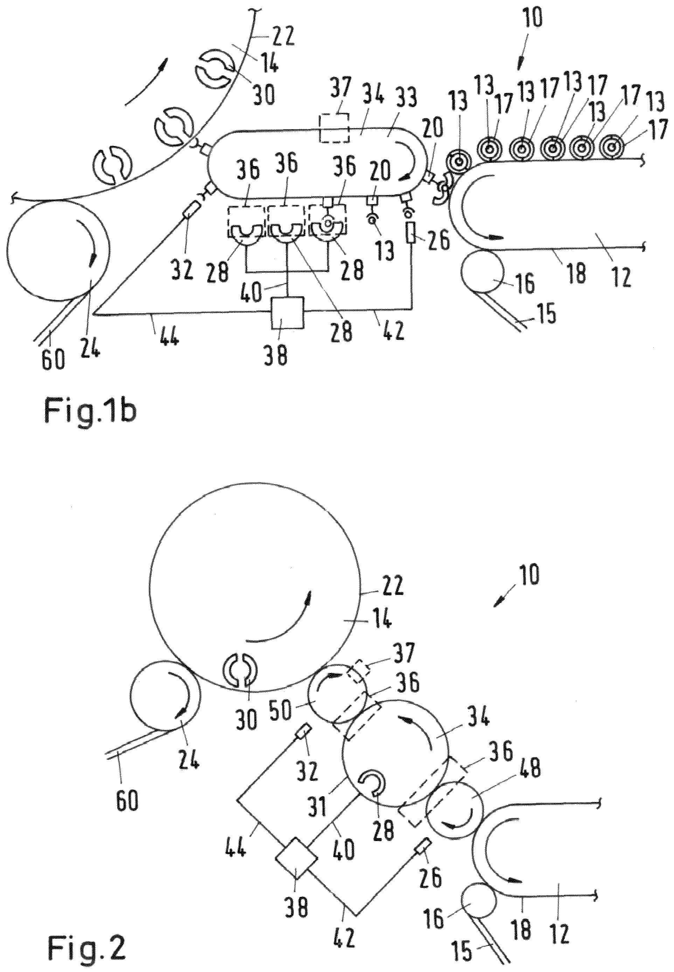

Die Behälterherstellungsmaschine wird im Folgenden in ihrer Gesamtheit mit dem Bezugszeichen 10 bezeichnet, wie zum Beispiel in den Figuren 1a und 1b dargestellt ist.

Gemäß Figur 1a kann die Behälterherstellungsmaschine 10 mindestens eine Zuführvorrichtung 15, mindestens ein Laderad 16, mindestens eine erste Heizvorrichtung 12, mindestens eine Umformvorrichtung 14, mindestens ein Behältertransferrad 24 und mindestens eine zweite Heizvorrichtung 28 umfassen. Die erste Heizvorrichtung 12 und die zweite Heizvorrichtung 28 sind als eigene Module ausgebildet, die bei der Planung des Aufbaus der Behälterherstellungsmaschine 10 flexibel zueinander angeordnet werden können. Nach der Montage der Behälterherstellungsmaschine 10 ist das räumliche Verhältnis der zweiten Heizvorrichtung 28 zu den weiteren Modulen der Behälterherstellungsmaschine 10 fest.

Weiter kann Behälterherstellungsmaschine 10 eine Transportstrecke aufweisen, entlang der die Vorformlinge 13 durch die Behälterherstellungsmaschine 10 transportiert werden. Die in den Figuren dargestellten Pfeile zeigen dabei die Transportrichtung der Vorformlinge 13 an.

Das Laderad 16 und das Behältertransferrad 24 können als Transportvorrichtungen Teil der Transportstrecke sein. Zusätzlich kann die Transportstrecke weitere Transportvorrichtungen aufweisen. In diesem Beispiel weist die Transportstrecke dabei weiter eine erste Transportvorrichtung 18 zum Transportieren von Vorformlingen 13 durch die erste Heizvorrichtung 12, eine zweite Transportvorrichtung 34 zum Transportieren der Vorformlinge 13 im Bereich der zweiten Heizvorrichtung 28 und eine dritte Transportvorrichtung 22 für die Umformvorrichtung 14 auf.

Die erste Heizvorrichtung 12 kann eine Heizstrecke aufweisen, durch die die Vorformlinge 13 mittels der ersten Transportvorrichtung 18 transportiert werden. Entlang der Heizstrecke können Radiatoren 11 angeordnet sein, die Heizenergie gemäß einem ersten Heizprofil an die an ihnen vorbeitransportierten Vorformlinge 13 abstrahlen können. Das erste Heizprofil kann entweder konstant über die Längsachse des Vorformlings sein oder über die Längsachse des Vorformlings variieren. Dabei wird das erste Heizprofil für eine Vielzahl von Vorformlingen 13 verwendet, die die erste Heizvorrichtung 12 durchlaufen. Die erste Transportvorrichtung 18 kann beispielsweise eine Förderkette aufweisen, an deren Kettenglieder Transportdorne angeordnet sind. Die Transportdornen können um ihre Längsachse drehbar sein und in die Mündung der Vorformlinge 13 eingreifen, um die Vorformlinge 13 zu halten.

Die zweite Heizvorrichtung 28 ist in diesem Beispiel zwischen der Umformvorrichtung 14 und der ersten Heizvorrichtung 12 angeordnet. Die zweite Heizvorrichtung 28 ist zum thermischen Konditionieren eines einzelnen Vorformlings 13 ausgebildet. D. h., dass gleichzeitig nur ein Vorformling in einer zweiten Heizvorrichtung 28 thermisch konditioniert werden kann.

Gemäß diesem Beispiel weist die Behälterherstellungsmaschine 10 mehrere zweite Heizvorrichtungen 28 auf. Die zweiten Heizvorrichtungen 28 sind in diesem Beispiel weiter stationär angeordnet. Die Vorformlinge 13 werden dabei mittels der zweiten Transportvorrichtung 34 von der ersten Heizvorrichtung 12 zu den zweiten Heizvorrichtungen 28 transportiert. Dabei wird jeder Vorformling 13 lediglich in einer der zweiten Heizvorrichtungen 28 thermisch konditioniert. D. h., dass ein Vorformling 13, der bereits in einer zweiten Heizvorrichtung 28 thermisch konditioniert wurde, nicht unmittelbar danach in eine weitere zweite Heizvorrichtung 28 eingelegt wird.

Die zweite Transportvorrichtung 34 weist in diesem Beispiel für den Transport der Vorformlinge 13 eine Vielzahl von Transporteinheiten 20 mit jeweils einem Greifer auf, die auf einer Trägerplatte 33 bewegt werden können. Die Transporteinheiten 20 können Vorformlinge 13 aus der ersten Transportvorrichtung 18 entnehmen, nachdem die Vorformlinge 13 die Heizstrecke der ersten Heizvorrichtung 12 durchlaufen haben.

Beim Transport von der ersten Heizvorrichtung 12 zur zweiten Heizvorrichtung 28 kann eine Eigenschaft der Vorformlinge 13, z. B. die Temperatur bzw. ein erstes Temperaturprofil der Vorformlinge 13, von einer ersten Messvorrichtung 26 erfasst werden. Die erste Messvorrichtung 26 kann auch andere Eigenschaften der Vorformlinge 13, wie z. B. die Opazität oder Transparenz, die Materialreinheit und/oder eine Farbe der Vorformlinge 13 ermitteln.

Aus der Eigenschaft, z. B. dem ersten Temperaturprofil, kann durch einen Vergleich mit einer Referenz-Eigenschaft, beispielsweise einem Soll-Temperaturprofil, das einem optimalen Temperaturprofil für die Umformung zu einem Behälter entsprechen kann, aus der Abweichung ein zweites Heizprofil für den jeweiligen Vorformling 13 ermittelt werden. Dieses zweite Heizprofil kann einer der zweiten Heizvorrichtungen 28 übermittelt werden, die der ersten Messvorrichtung 26 nachgeschaltet sind.

Im Folgenden wird als ermittelte Eigenschaft der Vorformlinge 13 stellvertretend auf die Temperaturprofile der Vorformlinge 13 verwiesen, ohne damit die anderen oben genannten Eigenschaften auszuschließen. Die nachfolgende Erläuterung kann daher auch mit den anderen oben genannten Eigenschaften gelesen werden.

Zur Ermittlung des zweiten Heizprofils kann die Behälterherstellungsmaschine 10 weiter eine Steuereinheit 38 aufweisen. Die Steuereinheit 38 kann über eine erste Signalverbindung 42 mit der ersten Messvorrichtung 26 verbunden sein. Die erste Signalverbindung 42 kann kabelgebunden oder kabellos ausgebildet sein. Über die erste Signalverbindung 42 kann die Steuereinheit 38 das erste Temperaturprofil, das die erste Messvorrichtung 26 ermittelt hat, erhalten. Das Soll-Temperaturprofil kann in der Steuereinheit 38 gespeichert sein und für den Vergleich mit dem gemessenen ersten Temperaturprofil der ersten Messvorrichtung 26 verwendet werden. Aus dem Vergleich kann die Steuereinheit 38 ein zweites Heizprofil ermitteln und über mindestens eine dritte Signalverbindung 40 an mindestens eine der zweiten Heizvorrichtungen 28 übermitteln. In diesem Beispiel sind die dritten Signalverbindungen 40 mehrerer zweiter Heizvorrichtungen 28 zusammengefasst dargestellt. Sie können jedoch auch als einzelne Signalverbindungen ausgebildet werden.

Die Transporteinheit 20, die den Vorformling 13 transportiert, dessen erstes Temperaturprofil für die Ermittlung des zweiten Heizprofils verwendet wurde, kann durch die Steuereinheit 38 angewiesen werden, den Vorformling 13 zu der zweiten Heizvorrichtung 28 zu transportieren, der das zweite Heizprofil übermittelt wurde.

Dazu kann die Transporteinheit 20 den Vorformling 13 zu einem Übergabebereich 36 transportieren, in dem die Vorformlinge 13 der zweiten Heizvorrichtung 28 übergeben werden. Jede zweite Heizvorrichtung 28 kann in diesem Beispiel einen eigenen Übergabebereich 36 aufweisen. In der zweiten Heizvorrichtung 28 wird der Vorformlinge 13 dann gemäß dem übermittelten zweiten Heizprofil thermisch konditioniert. Das zweite Heizprofil kann dabei über die Längsachse des Vorformlings 13 variieren oder konstant sein.

Nachdem die Vorformlinge 13 in einer zweiten Heizvorrichtung 28 thermisch konditioniert wurden, können sie durch eine Transporteinheit 20 aus der entsprechenden zweiten Heizvorrichtung 28 entnommen werden. Die Transporteinheit 20 kann den thermisch konditionierten Vorformling 13 dabei zu einer zweiten Messvorrichtung 32 transportieren, die ein zweites Temperaturprofil des Vorformlings 13 ermitteln kann.

Das zweite Temperaturprofil kann über eine zweite Signalverbindung 44 ebenfalls der Steuereinheit 38 übermittelt werden. Die Steuereinheit 38 kann das zweite Temperaturprofil mit dem Soll-Temperaturprofil vergleichen.

Wenn das zweite Temperaturprofil nicht mit dem Soll-Temperaturprofil übereinstimmt, kann die Transporteinheit 20 den Vorformling 13 zu einem Auswurfbereich 37 transportieren, um den Vorformlingen 13 aus der Transportstrecke zu entfernen.

Alternativ kann aus dem zweiten Temperaturprofil mittels der Steuereinheit 38 ein drittes Heizprofil erzeugt werden, das einer zweiten Heizvorrichtung 28 übermittelt wird. Der Vorformling 13 kann durch die Transporteinheit 20 dann zu dieser zweiten Heizvorrichtung transportiert werden, und unter Verwendung des dritten Heizprofils erneut thermisch konditioniert werden.

Stimmt das zweite Temperaturprofil im Wesentlichen mit dem Soll-Temperaturprofil überein, kann die Transporteinheit 20 angewiesen werden, den Vorformling 13 zu der Umformvorrichtung 14 zu transportieren. Die zweite Transportvorrichtung 34 kann damit als Vorformlingstransferrad fungieren, das die Vorformlinge 13 in die Umformstationen 30 der Umformvorrichtung 14 einlegt.

Die Umformvorrichtung 14 weist mindestens eine Umformstation 30 auf, in die ein Vorformlinge 13 eingelegt und dann zu einem Behälter umgeformt werden kann. In Figur 1 ist lediglich eine Umformstation 30 beispielhaft dargestellt. Jedoch kann die Umformvorrichtung 14 eine Vielzahl von Umformstationen 30 aufweisen. Die Umformstationen 30 können an dem Umfang eines Rads der dritten Transportvorrichtung 22 angeordnet sein. Das Rad kann um seine Achse drehbar gelagert sein.

Nach der Umformung können die Behälter einem Behältertransferrad 24 übergeben werden, das die Behälter aus den Umformstation 30 entnehmen und weiter transportieren kann. Dazu kann das Behältertransferrad 24 die Behälter zum Beispiel an eine fünfte Transportvorrichtung 60 übergeben.

Wie in Figur 1b dargestellt, kann die erste Heizvorrichtung 12 anstatt Radiatoren 11 Kammerheizsysteme 17 aufweisen, die einzelne Vorformlinge 13 thermisch konditionieren können. Die Kammerheizsysteme 17 können durch die erste Transportvorrichtung 18 entlang der Heizstrecke durch die erste Heizvorrichtung 12 transportiert werden. Die Transportvorrichtung 18 kann dazu ebenfalls eine Förderkette oder ein drehbar gelagertes Rad aufweisen, an der bzw. dem die Kammerheizsysteme 17 befestigt sein können.

Die Vorformlinge 13 können dann durch den Ladestern 16 in die Kammerheizsysteme 17 eingelegt werden. Alternativ können die Vorformlinge 13 durch ein Anheben bzw. Absenken der Kettenglieder der Förderkette in die Kammerheizsystem 17 eingeführt werden. Weiter ist denkbar, dass die Kammerheizsysteme 17 angehoben oder abgesenkt werden, um die Vorformlinge 13 ihnen anzuordnen.

Wie aus dem Vergleich zwischen der Figur 1a und 1b ersichtlich, kann die erste Heizvorrichtung 12 durch die modulare Bauweise der zweite Heizvorrichtungen 28 unterschiedlich zu den zweiten Heizvorrichtungen 28 bzw. zu der Umformvorrichtung 14 angeordnet werden. Auf diese Weise kann die Aufstellung der Behälterherstellungsmaschine 10 flexibel geplant werden. Weiter werden die zweiten Heizvorrichtungen 28 nicht durch von der ersten Heizvorrichtung 12 abgestrahlten Heizenergie beeinflusst.

In einem alternativen Ausführungsbeispiel gemäß Figur 2 kann die zweite Transportvorrichtung 34 ein Transportrad 31 aufweisen, an dessen Umfang die mindestens eine zweite Heizvorrichtung 28 angeordnet ist. Die zweite Heizvorrichtung 28 wird damit durch das Transportrad 31 entlang eines Teils der Transportstrecke transportiert. In diesem Beispiel kann zwischen der zweiten Transportvorrichtung 34 und der ersten Transportvorrichtung 18, die der ersten Heizvorrichtung 12 zugeordnet ist, ein erstes Vorformlingstransferrad 48 angeordnet sein. Das erste Vorformlingstransferrad 48 kann dazu ausgebildet sein, Vorformlinge 13 aus der ersten Heizvorrichtung 12 zu entnehmen und an der ersten Messvorrichtung 26 vorbeizutransportieren, wobei durch die erste Messvorrichtung 26 dann für jeden vorbeitransportierten Vorformling 13 ein eigenes erstes Temperaturprofil erstellt wird. Nach dem Vorbeitransport an der ersten Messvorrichtung 26 kann das erste Vorformlingstransferrad 48 die Vorformlinge 13 in einem ersten Übergabebereich 36 transportieren, um den Vorformling dann beispielsweise in eine zweite Heizvorrichtung 28 einzulegen oder einer Halteeinrichtung zu übergeben, die ebenfalls an dem Transportrad 31 befestigt sein kann. Im letzteren Fall kann die Halteeinrichtung zum Beispiel über eine Kurvensteuerung den von ihr gehaltenen Vorformling in eine zweite Heizvorrichtung 28 einführen und wieder ausführen, um den Vorformling 13 für mit dem zweiten Heizprofil thermisch zu konditionieren.

Nach der thermischen Konditionierung durch die zweite Heizvorrichtung 28 kann ein zweites Vorformlingstransferrad 50 die Vorformlinge in einem zweiten Übergabebereich 36 aus der zweiten Heizvorrichtung 28 entnehmen bzw. von der Halteeinrichtung übernehmen. Das zweite Vorformlingstransferrad 50 kann die Vorformlinge 13 an der zweiten Messvorrichtung 32 vorbei transportieren, wobei dann für jeden vorbeitransportierten Vorformlingen eigenes zweites Temperaturprofil erstellt wird. Danach kann das zweite Vorformlingstransferrad 50 je nach Ergebnis des Vergleiches des zweiten Temperaturprofils mit dem Soll-Temperaturprofil entweder eine Übergabe des Vorformlings 13 an die Umformvorrichtung 14 oder einen Auswurf bzw. eine erneute thermische Konditionierung durch eine zweite Heizvorrichtung 28 mit einem dritten Heizprofil ausführen.

Für eine erneute thermische Konditionierung durch eine zweite Heizvorrichtung 28 kann das Vorformlingstransferrad 50 den Vorformling 13 im zweiten Übergabebereich erneut an eine zweite Heizvorrichtung 28 bzw. eine Halteeinrichtung des Transportrads 31 übergeben.

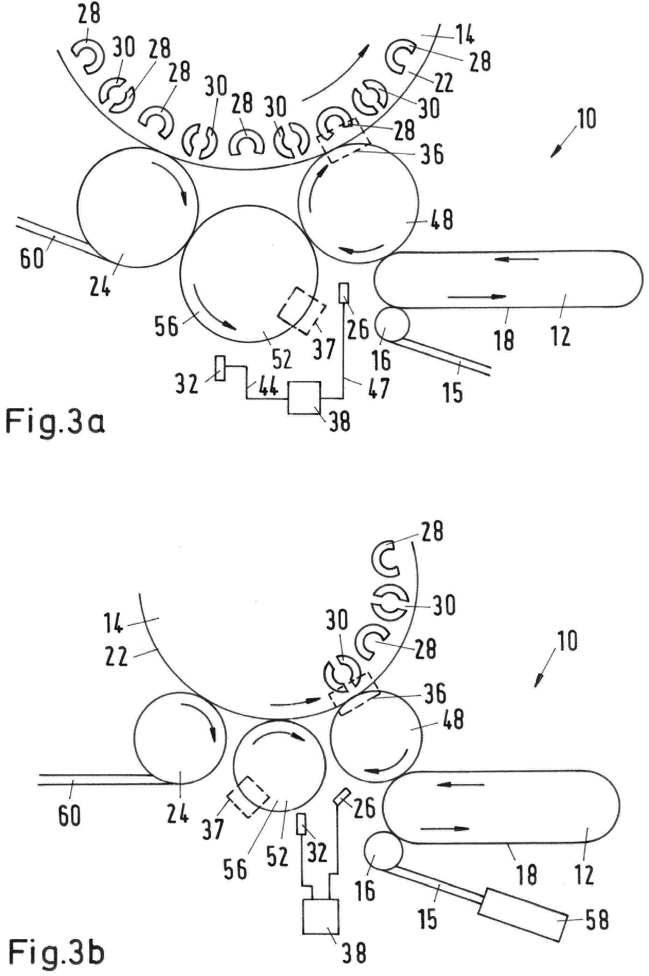

In den Figuren 3a und 3b sind weitere alternative Ausführungsbeispiele dargestellt, bei denen die mindestens eine zweite Heizvorrichtung 28 in die Umformvorrichtung 14 integriert ist.

Gemäß Figur 3a können die zweiten Heizvorrichtungen 28 abwechselnd mit Umformstationen 30 auf dem Umfang eines Blasrads 22 angeordnet sein. Das Vorformlingstransferrad 48 ist dabei derart ausgebildet, dass es die Vorformlinge 13, die aus der ersten Heizvorrichtung 12 entnommen wurden, zunächst an der ersten Messvorrichtung 26 vorbei transportiert, um für jeden Vorformling 13 ein erstes Temperaturprofil zu übermitteln, und danach in die zweiten Heizvorrichtungen 28 einlegt. Dazu kann die Steuereinheit 38 ein zweites Heizprofil aus dem ersten Temperaturprofil erzeugen und an eine der zweiten Heizvorrichtungen 28 übermitteln.

Die Drehung des Transportrads der Umformvorrichtung 14, die Übermittlung des zweiten Heizprofils an die zweite Heizvorrichtung 28 und die Drehung des Vorformlingstransferrads 48 sind dabei derart abgestimmt bzw. synchronisiert, dass die Vorformlinge 13 durch das Vorformlingstransferrad 28 in genau diejenige zweite Heizvorrichtung 28 eingelegt werden, die das zweite Heizprofil genau dieses Vorformlings 13 erhalten hat.

Das Behältertransferrad 24 kann dann die Vorformlinge 13 aus dem zweiten Heizvorrichtungen 28 entnehmen, nachdem sie mit dem zweiten Heizprofil thermisch konditioniert wurden. Das Behältertransferrad 24 kann die Vorformlinge an eine Umsetzvorrichtung 56 übergeben, die eine vierte Transportvorrichtung 52 aufweisen kann. Mit der vierten Transportvorrichtung 52 können die Vorformlinge an der zweiten Messvorrichtung 32 vorbei transportiert werden, wobei für jeden vorbeitransportierten Vorformling 13 ein zweites Temperaturprofil erstellt wird.

Je nach Ergebnis des Vergleichs mit dem Soll-Temperaturprofil kann ein Auswurf oder eine Übergabe an das Vorformlingstransferrad 48 erfolgen, um den Vorformling gegebenenfalls erneut in einer zweiten Heizvorrichtung 28 thermisch zu konditionieren.

Eine Übergabe an das Vorformlingstransferrad 28 von der Umsetzvorrichtung 56 kann ebenfalls erfolgen, wenn das zweite Temperaturprofil mit dem Soll-Temperaturprofil im Wesentlichen übereinstimmt. Das Vorformlingstransferrad 28 kann dann derart mit der dritten Transportvorrichtung 22 der Umformvorrichtung 14 synchronisiert sein, dass die von der Umsetzvorrichtung 56 übergebenen Vorformlinge 13 in die Umformstationen 30 eingelegt werden. In den Umformstationen 30 können die Vorformlinge 13 zu Behältern umgeformt werden.

Nach der Umformung können die Behälter durch das Behältertransferrad 24 aus den Umformstation 30 entnommen werden, um weiter transportiert und gegebenenfalls behandelt zu werden.

Anstatt eines Behältertransferrads 24 können auch zwei Transferräder vorgesehen werden, wobei eines der Transferräder die Vorformlinge aus den zweiten Heizvorrichtungen 28 entnimmt und an die Umsetzvorrichtung 56 übergibt. Das andere Transferrad kann dann die Behälter aus den Umformstationen 30 entnehmen und weitertransportieren, z. B. durch Übergabe an die fünfte Transportvorrichtung 60.

In einem weiteren Ausführungsbeispiel gemäß Figur 3b ist die Umsetzvorrichtung 56 nicht wie in Figur 3a dargestellt zum Entnehmen von dem Behältertransferrad 24 und zum Übergeben mit dem Vorformlingstransferrad 48 ausgebildet. Stattdessen ist die Umsetzvorrichtung 56 unmittelbar zum Entnehmen und gegebenenfalls Übergeben von Vorformlingen 13 aus der zweiten Heizvorrichtung 28 bzw. an die zweite Heizvorrichtung 28 und zum Übergeben an die Umformstationen 30 ausgebildet.

D. h., dass die Umsetzvorrichtung 56 die in der zweiten Heizvorrichtung 28 thermisch konditionierten Vorformlinge 13 aus der zweiten Messvorrichtung 28 entnehmen, an der zweiten Messvorrichtung 32 vorbei transportieren und je nach Ergebnis der Messung in eine Umformstation 30 einlegen kann, erneut in eine zweite Heizvorrichtung 28 einlegen kann oder in einem Auswurfbereich 37 auswerfen kann.

In diesem Beispiel kann die Behälterherstellungsmaschine 10 weiter eine Vorformlingsherstellungsvorrichtung 58 aufweisen, die zum Beispiel mittels Spritzguss Vorformlinge 13 herstellen kann. Die Vorformlingsherstellungsvorrichtung 48 kann in allen in dieser Beschreibung erläuterten Beispielen, auch wenn nicht dargestellt, optional vorhanden sein und beispielsweise an die Zuführvorrichtung 15 angeschlossen sein und gegebenenfalls die Transportstrecke entsprechend erweitern. Wenn die Behälterherstellungsmaschine 10 eine Vorformlingsherstellungsvorrichtung 58 aufweist, können die Vorformlinge 13, ohne vorher auf Umgebungstemperatur abzukühlen, unmittelbar in die erste Heizvorrichtung 12 oder die zweite Heizvorrichtung 28 eingeführt werden.

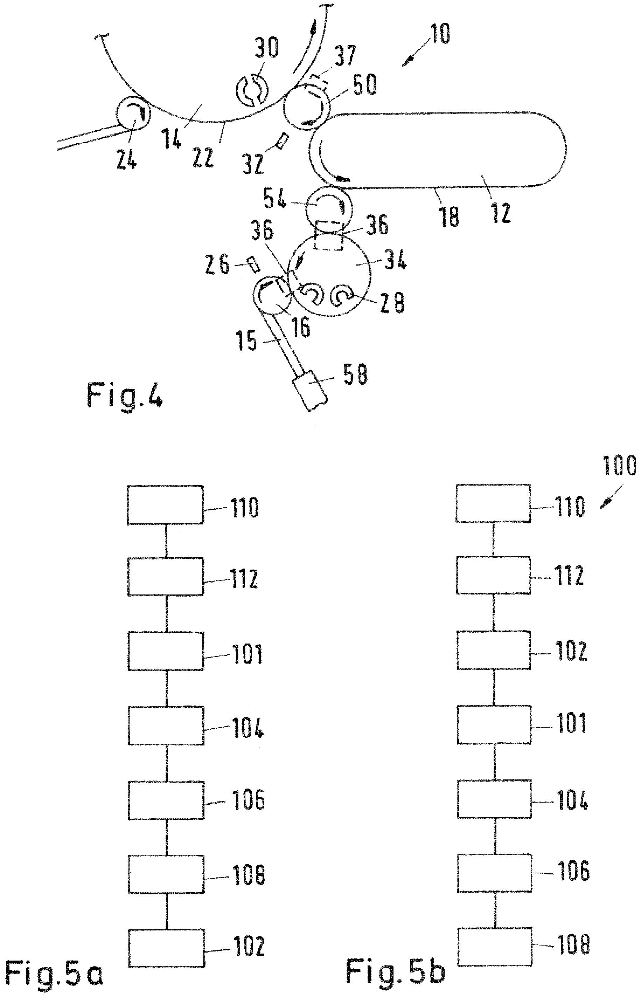

In Figur 4 ist ein weiteres Ausführungsbeispiel dargestellt, in der die mindestens eine zweite Heizvorrichtung 28 der ersten Heizvorrichtung 12 entlang der Transportstrecke vorgeschaltet ist. D. h., dass die Vorformlinge 13 zuerst zu der zweiten Heizvorrichtung 28 transportiert werden, um nach der individuellen thermischen Konditionierung mit dem zweiten Heizprofil zu der ersten Heizvorrichtung 12 transportiert zu werden. Dieses Beispiel kann besonders vorteilhaft mit einer oben bereits erläuteren Vorformlingsherstellungsvorrichtung 48 kombiniert werden. In der ersten Heizvorrichtung 12 können die Vorformlinge 13 dann mit dem ersten Heizprofil thermisch konditioniert werden.

Entsprechend kann die erste Messvorrichtung 26 an dem Ladestern 16 angeordnet sein, um für jeden Vorformling 13 ein erstes Temperaturprofil zu ermitteln. Der Ladestern 16 kann dazu ausgebildet sein, die Vorformlinge 13 in die zweiten Heizvorrichtungen 28 einzulegen bzw. die Vorformlinge 13 an diese zu übergeben.

Nach der thermischen Konditionierung durch die zweite Heizvorrichtung 28 kann ein zweiter Ladestern 54 die Vorformlinge 13 aus der zweiten Heizvorrichtung 28 übernehmen und an die erste Heizvorrichtung 12 übergeben.

In allen in dieser Beschreibung erläuterten Beispielen kann die Steuereinheit 38 zum Steuern der Umsetzvorrichtung 56 bzw. einer Auswurfvorrichtung (nicht dargestellt) ausgebildet sein. Weiter kann die Steuereinheit 38 über Signalverbindungen mit den zweiten Heizvorrichtungen 28, der ersten und zweiten Messvorrichtung 26, 32, der Umsetzvorrichtung 56 und weiteren Komponenten der Behälterherstellungsmaschine 10 verbunden sein.

Weiter ist selbstverständlich ebenso denkbar, dass sowohl vor als auch nach der ersten Heizvorrichtung 12 jeweils eine individuelle Heizung der Vorformlinge 13 stattfindet. Dazu können entlang der Transportstrecke vor der ersten Heizvorrichtung 12 mindestens eine zweite Heizvorrichtung 28 und entlang der Transportstrecke nach der ersten Heizvorrichtung 12 eine weitere zweite Heizvorrichtung 28 angeordnet sein. Weiter können dann jeweils zwei erste Messvorrichtungen 26 den jeweiligen zweiten Heizvorrichtungen 28 vorgeschaltet sein, um vor der individuellen Beheizung der Vorformlinge jeweils ein Temperaturprofil für den jeweiligen Vorformling zur Erzeugung eines Heizprofils zu ermitteln.

Figur 5a ein Flussdiagramm eines Verfahrens 100 zum Herstellen von Behältern aus Vorformlingen. In dem Verfahren 100 werden dabei thermisch konditionierte Vorformlinge in einer Umformvorrichtung 14 zu Behältern umgeformt.

Das Verfahren 100 weist den Schritt 102 auf, in dem mindestens ein Vorformling 13 gemäß dem ersten Heizprofil in der ersten Heizvorrichtung 12 thermisch konditioniert wird.

Weiter weist das Verfahren 100 weiter den Schritt 104 auf, in der ein erstes Temperaturprofil des Vorformlings 13 mit einer ersten Messvorrichtung 26 ermittelt wird. Die Messvorrichtung kann das erste Temperaturprofil einer Steuereinheit 38 bereitstellen.

Die Steuereinheit 38 kann in einem Schritt 106 ein zweites Heizprofil für den Vorformling 13 erzeugen und dabei das erste Temperaturprofil verwenden. Dazu kann zum Beispiel eine Abweichung zwischen dem ersten Temperaturprofil und einem Soll-Temperaturprofil ermittelt werden. Das zweite Heizprofil kann dazu ausgebildet sein, diese Abweichung zumindest rechnerisch zu beseitigen.

Weiter kann das Verfahren 100 den Schritt 108 aufweisen, in dem das zweite Heizprofil von der zweiten Heizvorrichtung 28 dazu verwendet wird, um den Vorformling 13 thermisch zu konditionieren. Dazu kann vorher das zweite Heizprofil an die zweite Heizvorrichtung 28 übermittelt werden.

Weiter kann das Verfahren den Schritt 101 aufweisen, in dem der mindestens eine Vorformling 13 zwischen der ersten Heizvorrichtung 12 und der zweiten Heizvorrichtung 28 in einem Übergabebereich 36 zwischen einer Transportvorrichtung und der mindestens einen zweiten Heizvorrichtung 28 übergeben wird. Die Transportvorrichtung kann Teil einer Transportstrecke sein.

Der Schritt 101 kann gemäß Figur 5a vor dem Schritt 102 oder gemäß Figur 5b nach dem Schritt 102 erfolgen. Entsprechend können die Schritte 104, 106 und 108 ebenfalls vor dem Schritt 102 oder nach dem Schritt 102 durchgeführt werden.

Weiter können die Schritte 101,104 bis 108 in einem Beispiel jeweils sowohl vor als auch nach dem Schritt 102 durchgeführt werden. D. h., dass in diesem Beispiel sowohl vor als auch nach dem Schritt 102 eine individuelle thermische Konditionierung der Vorformlinge stattfinden kann.

Optional können vor den oben erläuterten Schritten 101 bis 108 die Schritte 110 und 112 vorgesehen werden.

Im Schritt 110, kann der mindestens eine Vorformling mittels einer Vorformlingherstellungsvorrichtung 58 hergestellt werden. Dies kann beispielsweise mit einer Spritzgussmaschine erfolgen. Dabei kann der hergestellte Vorformling unmittelbar nach seiner Herstellung an die Transportstrecke der Behälterherstellungsmaschine 10 ausgegeben werden.

Im Schritt 112 kann der Vorformling 13 dann von der Vorformlingsherstellungsvorrichtung 58 zu der ersten Heizvorrichtung 12 oder zu der zweiten Heizvorrichtung 28 entlang der Transportstrecke transportiert werden.

Die oben beschriebenen Beispiele dienen in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein und sofern logisch nachvollziehbar auch in allen Beispielen untereinander ausgetauscht und kombiniert werden.

### Bezugszeichenliste

- 10: Behälterherstellungsmaschine
- 11: Radiator
- 12: erste Heizvorrichtung
- 13: Vorformling
- 14: Umformvorrichtung
- 15: Zuführvorrichtung
- 16: Laderad
- 17: Kammerheizsystem
- 18: erste Transportvorrichtung
- 20: Transporteinheit
- 22: dritte Transportvorrichtung
- 24: Behältertransferrad
- 26: erste Messvorrichtung
- 28: zweite Heizvorrichtung
- 30: Umformstation
- 31: Transportrad
- 32: zweite Messvorrichtung
- 33: Trägerplatte
- 34: zweite Transportvorrichtung
- 36: Übergabebereich
- 38: Steuereinheit
- 40: dritte Signalverbindung
- 42: erste Signalverbindung
- 44: zweite Signalverbindung
- 48: erstes Vorformlingstransferrad
- 50: zweites Vorformlingstransferrad
- 52: vierte Transportvorrichtung
- 54: zweiter Ladestern
- 56: Umsetzvorrichtung
- 58: Vorformlingherstellungsvorrichtung
- 60: fünfte Transportvorrichtung

## Patentansprüche

1. Behälterherstellungsmaschine (10) zum Herstellen von Behältern aus Vorformlingen (13), umfassend eine erste Heizvorrichtung (12) zum thermischen Konditionieren mindestens eines Vorformlings (13) gemäß einem ersten Heizprofil, mindestens eine Umformvorrichtung (14) zum Umformen des mindestens einen thermisch konditionierten Vorformlings (13) zu einem Behälter, eine Transportstrecke zum Transportieren von Vorformlingen (13) mindestens von der ersten Heizvorrichtung (12) bis mindestens zur Umformvorrichtung (14) und mindestens eine in der Transportstrecke angeordnete zweite Heizvorrichtung (28) zum einzeln thermischen Konditionieren des mindestens einen Vorformlings (13) gemäß einem für jeden Vorformling (13) individuellen zweiten Heizprofil, **dadurch gekennzeichnet, dass** die zweite Heizvorrichtung (28) als ein von der ersten Heizvorrichtung (12) unabhängig positioniertes Modul der Behälterherstellungsmaschine (10) ausgebildet ist.

2. Behälterherstellungsmaschine (10) nach Anspruch 1, **dadurch gekennzeichnet, dass** die Transportstrecke zwischen der ersten Heizvorrichtung (12) und der zweiten Heizvorrichtung (28) einen Übergabebereich (36) für Vorformlinge zwischen mindestens einer Transportvorrichtung (16, 18, 22, 24, 34, 48, 50, 52, 54) der Transportstrecke und der zweiten Heizvorrichtung (28) aufweist.

3. Behälterherstellungsmaschine (10) nach Anspruch 1 oder 2, **dadurch gekennzeichnet, dass** die erste Messvorrichtung (26) und die zweite Heizvorrichtung (28) entlang der Transportstrecke vor der ersten Heizvorrichtung (12) angeordnet sind.

4. Behälterherstellungsmaschine (10) nach Anspruch 1 oder 2, **dadurch gekennzeichnet, dass** die erste Messvorrichtung (26) und die zweite Heizvorrichtung (28) entlang der Transportstrecke nach der ersten Heizvorrichtung (12) angeordnet sind.

5. Behälterherstellungsmaschine (10) nach Anspruch 3, **dadurch gekennzeichnet, dass** die zweite Heizvorrichtung (28) in die Umformvorrichtung (14) integriert ist.

6. Behälterherstellungsmaschine (10) nach einem der vorangegangenen Ansprüche, **dadurch gekennzeichnet, dass** die Behälterherstellungsmaschine (10) eine erste Messvorrichtung (26) zum Messen eines ersten Profils einer Eigenschaft, insbesondere eines Temperaturprofils, eines Opazität- oder Transparenzprofils, eines Materialreinheitprofils und/oder eines Farbprofils, des mindestens einen entlang der Transportstrecke transportierten Vorformlings (13) aufweist und das zweite Heizprofil auf dem für den Vorformling (13) gemessenen ersten Profil basiert, wobei die zweite Heizvorrichtung (28) entlang der Transportstrecke hinter der ersten Messvorrichtung (26) angeordnet ist.

7. Behälterherstellungsmaschine (10) nach einem der vorangegangenen Ansprüche, **dadurch gekennzeichnet, dass** die zweite Heizvorrichtung (28) als eine separate Heizeinheit (28), insbesondere eine Kammerheizung oder Topfheizung, für einen einzelnen Vorformling (13) ausgebildet ist.

8. Behälterherstellungsmaschine (10) nach einem der vorangegangenen Ansprüche, **dadurch gekennzeichnet, dass** die Behälterherstellungsmaschine (10) eine zweite Messvorrichtung (32) zum Messen eines zweiten Temperaturprofils mindestens eines entlang der Transportstrecke transportierten Vorformlings (13) aufweist, die entlang der Transportstrecke nach der mindestens einen zweiten Heizvorrichtung (28) angeordnet ist.

9. Behälterherstellungsmaschine (10) nach einem der vorangegangenen Ansprüche, **dadurch gekennzeichnet, dass** die Behälterherstellungsmaschine (10) eine Umsetzvorrichtung zum Bewegen eines aus der zweiten Heizvorrichtung (28) entnommenen Vorformlings (13) zu der zweiten Messvorrichtung (32) aufweist.

10. Behälterherstellungsmaschine (10) nach einem der vorangegangenen Ansprüche, **dadurch gekennzeichnet, dass** die Behälterherstellungsmaschine (10) weiter eine Vorformlingherstellungsvorrichtung (58) aufweist, wobei die Transportstrecke sich zusätzlich von der Vorformlingherstellungsvorrichtung (58) zur ersten Heizvorrichtung (12) oder zur zweiten Heizvorrichtung (28) erstreckt.

11. Verfahren (100) zum Herstellen von Behältern aus Vorformlingen (13), wobei thermisch konditionierte Vorformlinge in einer Umformvorrichtung (14) zu Behältern geformt werden, wobei das Verfahren (100) vorher zumindest die folgenden Schritte aufweist:
- Thermisches Konditionieren (102) mindestens eines Vorformlings (13) gemäß einem ersten Heizprofil mittels einer ersten Heizvorrichtung (12);
wobei davor und/oder danach die folgenden Schritte durchgeführt werden:
- Einzeln thermisches Konditionieren (108) des Vorformlings (13) gemäß einem zweiten Heizprofil in einer zweiten Heizvorrichtung (28) und **dadurch gekennzeichnet, dass** die zweite Heizvorrichtung (28) als ein von der ersten Heizvorrichtung (12) unabhängig positioniertes Modul der Behälterherstellungsmaschine (10) ausgebildet ist.

12. Verfahren (100) nach Anspruch 11, **dadurch gekennzeichnet, dass** der mindestens eine Vorformling zwischen der zweiten Heizvorrichtung und der ersten Heizvorrichtung zwischen einer Transportvorrichtung der Transportstrecke und der zweiten Heizvorrichtung in einem Übergabebereich übergeben (101) wird.

13. Verfahren (100) nach Anspruch 11 oder 12, **dadurch gekennzeichnet, dass** das Verfahren (100) weiter zumindest die folgenden Schritte aufweist:
- Herstellen (110) mindestens eines Vorformlings (13) mittels einer Vorformlingherstellungsvorrichtung (58) und Ausgeben des Vorformlings (13) an die Transportstrecke unmittelbar nach dessen Herstellung; und
- Transportieren (112) des Vorformlings (13) von der Vorformlingherstellungsvorrichtung (58) zur ersten Heizvorrichtung (12) oder zweiten Heizvorrichtung (28) entlang der Transportstrecke.

14. Verfahren (100) nach einem der Ansprüche 11 bis 13, **dadurch gekennzeichnet, dass** das Verfahren (100) vor dem einzeln thermischen Konditionieren (108) des Vorformlings weiter zumindest folgende Schritte aufweist:
- Ermitteln (104) eines ersten Profils einer Eigenschaft, insbesondere eines Temperaturprofils, eines Opazität- oder Transparenzprofils, eines Materialreinheitprofils und/oder eines Farbprofils, eines Vorformlings (13) mittels einer ersten Messvorrichtung (26) und
- Erzeugen (106) des zweiten Heizprofils für den Vorformling (13) basierend auf dem ersten Profil.

## Claims

1. Container manufacturing machine (10) for manufacturing containers from preforms (13), comprising a first heating device (12) for thermally conditioning at least one preform (13) according to a first heating profile, at least one forming device (14) for forming the at least one thermally conditioned preform (13) into a container, a transport section for transporting preforms (13) at least from the first heating device (12) to at least the forming device (14), and at least one second heating device (28) arranged in the transport section for individually thermally conditioning the at least one preform (13) according to an individual second heating profile for each preform (13), **characterised in that** the second heating device (28) is configured as a module of the container manufacturing machine (10) positioned independently of the first heating device (12).

2. Container manufacturing machine (10) according to claim 1, **characterised in that** the transport section between the first heating device (12) and the second heating device (28) has a transfer area (36) for preforms between at least one transport device (16, 18, 22, 24, 34, 48, 50, 52, 54) of the transport section and the second heating device (28).

3. Container manufacturing machine (10) according to claim 1 or 2, **characterised in that** the first measuring device (26) and the second heating device (28) are arranged along the transport section before the first heating device (12).

4. Container manufacturing machine (10) according to claim 1 or 2, **characterised in that** the first measuring device (26) and the second heating device (28) are arranged along the transport section after the first heating device (12).

5. Container manufacturing machine (10) according to claim 3, **characterised in that** the second heating device (28) is integrated into the forming device (14).

6. Container manufacturing machine (10) according to any of the preceding claims, **characterised in that** the container manufacturing machine (10) has a first measuring device (26) for measuring a first profile of a property, in particular a temperature profile, an opacity or transparency profile, a material purity profile and/or a colour profile, of the at least one preform (13) transported along the transport section, and the second heating profile is based on the first profile measured for the preform (13), the second heating device (28) being arranged along the transport section after the first measuring device (26).

7. Container manufacturing machine (10) according to any of the preceding claims, **characterised in that** the second heating device (28) is configured as a separate heating unit (28), in particular a chamber heater or pot heater, for an individual preform (13).

8. Container manufacturing machine (10) according to any of the preceding claims, **characterised in that** the container manufacturing machine (10) has a second measuring device (32) for measuring a second temperature profile of at least one preform (13) transported along the transport section, which is arranged along the transport section after the at least one second heating device (28).

9. Container manufacturing machine (10) according to any of the preceding claims, **characterised in that** the container manufacturing machine (10) comprises a transfer device for moving a preform (13) removed from the second heating device (28) to the second measuring device (32).

10. Container manufacturing machine (10) according to any of the preceding claims, **characterised in that** the container manufacturing machine (10) further comprises a preform manufacturing device (58), wherein the transport section additionally extends from the preform manufacturing device (58) to the first heating device (12) or to the second heating device (28).

11. Method (100) for manufacturing containers from preforms (13), wherein thermally conditioned preforms are moulded into containers in a forming device (14), the method (100) comprising at least the following steps carried out beforehand:
- thermally conditioning (102) at least one preform (13) according to a first heating profile by means of a first heating device (12),
the following steps being carried out before and/or afterwards:
- individually thermally conditioning (108) the preform (13) according to a second heating profile in a second heating device (28) and **characterised in that** the second heating device (28) is configured as a module of the container manufacturing machine (10) positioned independently of the first heating device (12).

12. Method (100) according to claim 11, **characterised in that** the at least one preform between the second heating device and the first heating device is transferred (101) in a transfer area between a transport device of the transport section and the second heating device.

13. Method (100) according to claim 11 or 12, **characterised in that** the method (100) further comprises the following steps:
- manufacturing (110) at least one preform (13) by means of a preform manufacturing device (58) and delivering the preform (13) to the transport section immediately after its manufacture, and
- transporting (112) the preform (13) from the preform manufacturing device (58) to the first heating device (12) or second heating device (28) along the transport section.

14. Method (100) according to any of claims 11 to 13, **characterised in that** the method (100) further comprises at least the following steps prior to the individual thermal conditioning (108) of the preform:
- determining (104) a first profile of a property, in particular a temperature profile, an opacity or transparency profile, a material purity profile and/or a colour profile, of a preform (13) by means of a first measuring device (26), and
- generating (106) the second heating profile for the preform (13) based on the first profile.

## Revendications

1. Machine de fabrication de récipients (10) pour fabriquer des récipients à partir de préformes (13), comprenant un premier dispositif de chauffage (12) pour le conditionnement thermique d'au moins une préforme (13) selon un premier profil de chauffage, au moins un dispositif de formage (14) pour former l'au moins une préforme (13) conditionnée thermiquement en un récipient, une voie de transport pour transporter des préformes (13) au moins du premier dispositif de chauffage (12) jusqu'au moins au dispositif de formage (14), et au moins un deuxième dispositif de chauffage (28) disposé dans la voie de transport pour le conditionnement thermique individuel de l'au moins une préforme (13) selon un deuxième profil de chauffage individuel pour chaque préforme (13), **caractérisée en ce que** le deuxième dispositif de chauffage (28) est réalisé comme un module de la machine de fabrication de récipients (10) positionné indépendamment du premier dispositif de chauffage (12).

2. Machine de fabrication de récipients (10) selon la revendication 1, **caractérisée en ce que** la voie de transport entre le premier dispositif de chauffage (12) et le deuxième dispositif de chauffage (28) présente une zone de transfert (36) pour des préformes entre au moins un dispositif de transport (16, 18, 22, 24, 34, 48, 50, 52, 54) de la voie de transport et le deuxième dispositif de chauffage (28).

3. Machine de fabrication de récipients (10) selon la revendication 1 ou 2, **caractérisée en ce que** le premier dispositif de mesure (26) et le deuxième dispositif de chauffage (28) sont disposés le long de la voie de transport avant le premier dispositif de chauffage (12).

4. Machine de fabrication de récipients (10) selon la revendication 1 ou 2, **caractérisée en ce que** le premier dispositif de mesure (26) et le deuxième dispositif de chauffage (28) sont disposés le long de la voie de transport après le premier dispositif de chauffage (12).

5. Machine de fabrication de récipients (10) selon la revendication 3, **caractérisée en ce que** le deuxième dispositif de chauffage (28) est intégré dans le dispositif de formage (14).

6. Machine de fabrication de récipients (10) selon l'une quelconque des revendications précédentes, **caractérisée en ce que** la machine de fabrication de récipients (10) présente un premier dispositif de mesure (26) pour mesurer un premier profil d'une propriété, notamment un profil de température, un profil d'opacité ou de transparence, un profil de pureté de matériau et/ou un profil de couleur, de l'au moins une préforme (13) transportée le long de la voie de transport et le deuxième profil de chauffage est basé sur le premier profil mesuré pour la préforme (13), dans laquelle le deuxième dispositif de chauffage (28) est disposé le long de la voie de transport derrière le premier dispositif de mesure (26).

7. Machine de fabrication de récipients (10) selon l'une quelconque des revendications précédentes, **caractérisée en ce que** le deuxième dispositif de chauffage (28) est réalisé comme une unité de chauffage (28) séparée, notamment un chauffage de chambre ou chauffage de pot, pour une préforme (13) individuelle.

8. Machine de fabrication de récipients (10) selon l'une quelconque des revendications précédentes, **caractérisée en ce que** la machine de fabrication de récipients (10) présente un deuxième dispositif de mesure (32) pour mesurer un deuxième profil de température d'au moins une préforme (13) transportée le long de la voie de transport, qui est disposée le long de la voie de transport après l'au moins un deuxième dispositif de chauffage (28).

9. Machine de fabrication de récipients (10) selon l'une quelconque des revendications précédentes, **caractérisée en ce que** la machine de fabrication de récipients (10) présente un dispositif de déplacement pour mouvoir une préforme (13) prélevée du deuxième dispositif de chauffage (28) vers le deuxième dispositif de mesure (32).

10. Machine de fabrication de récipients (10) selon l'une quelconque des revendications précédentes, **caractérisée en ce que** la machine de fabrication de récipients (10) présente en outre un dispositif de fabrication de préformes (58), dans laquelle la voie de transport s'étend en outre du dispositif de fabrication de préformes (58) au premier dispositif de chauffage (12) ou au deuxième dispositif de chauffage (28).

11. Procédé (100) de fabrication de récipients à partir de préformes (13), dans lequel des préformes conditionnées thermiquement sont formées en récipients dans un dispositif de formage (14), dans lequel le procédé (100) présente préalablement au moins les étapes suivantes :
- le conditionnement thermique (102) d'au moins une préforme (13) selon un premier profil de chauffage au moyen d'un premier dispositif de chauffage (12) ;
dans lequel les étapes suivantes sont effectuées avant et/ou après :
- le conditionnement thermique individuel (108) de la préforme (13) selon un deuxième profil de chauffage dans un deuxième dispositif de chauffage (28) et
**caractérisé en ce que** le deuxième dispositif de chauffage (28) est réalisé comme un module de la machine de fabrication de récipients (10) positionné indépendamment du premier dispositif de chauffage (12).

12. Procédé (100) selon la revendication 11, **caractérisé en ce que** l'au moins une préforme est transférée entre le deuxième dispositif de chauffage et le premier dispositif de chauffage entre un dispositif de transport de la voie de transport et le deuxième dispositif de chauffage dans une zone de transfert (101).

13. Procédé (100) selon la revendication 11 ou 12, **caractérisé en ce que** le procédé (100) présente en outre au moins les étapes suivantes :
- la fabrication (110) d'au moins une préforme (13) au moyen d'un dispositif de fabrication de préforme (58) et la distribution de la préforme (13) sur la voie de transport immédiatement après sa fabrication ; et
- le transport (112) de la préforme (13) du dispositif de fabrication de préformes (58) au premier dispositif de chauffage (12) ou deuxième dispositif de chauffage (28) le long de la voie de transport.

14. Procédé (100) selon l'une quelconque des revendications 11 à 13, **caractérisé en ce que** le procédé (100) présente en outre au moins les étapes suivantes avant le conditionnement thermique individuel (108) de la préforme :
- la détermination (104) d'un premier profil d'une propriété, notamment d'un profil de température, d'un profil d'opacité ou de transparence, d'un profil de pureté de matériau et/ou d'un profil de couleur, d'une préforme (13) au moyen d'un premier dispositif de mesure (26) et
- la génération (106) du deuxième profil de chauffage pour la préforme (13) sur la base du premier profil.
